# EUROPÄISCHE PATENTANMELDUNG

(11) **EP 2 803 687 A1**
(43) Veröffentlichungstag der Anmeldung: **19.11.2014**
(21) Anmeldenummer: 13167475.6
(22) Anmeldetag: 13.05.2013
(51) Int. Cl.: C08G 59/40, B29C 70/50, C08G 59/50, C08L 63/00

(54) **Epoxidharzzusammensetzung für Faser-Matrix-Halbzeuge**

(71) Anmelder: BASF SE, 67056 Ludwigshafen (DE)
(72) Erfinder: Yin, Chunhong, 67056 Ludwigshafen (DE); Kaffee, Achim, 49086 Osnabrück (DE); Henningsen, Michael, 67227 Frankenthal (DE); Zwecker, Joachim, 69469 Weinheim (DE); Gehringer, Lionel, 67470 Schaffhouse-pres-Seltz (FR)

(57) **Zusammenfassung**

Die vorliegende Erfindung betrifft ein Epoxidharz-Zusammensetzung als Matrix-Komponente für Sheet Molding Compounds (SMC) und/oder Bulk Molding Compounds (BMC), umfassend eine Harzkomponente umfassend mindestens ein Epoxidharz und eine Härterkomponente umfassend mindestens eine Imidazolverbindung und mindestens einen latenten Härter. In dieser Epoxidharz-Zusammensetzung liegt die Menge der eingesetzten Imidazolverbindungen in einem Bereich von 0,007 bis 0,025 mol pro mol Epoxidgruppen der gesamten Zusammensetzung, und die Gesamtmenge an gegebenenfalls enthaltenen primären Amin-Gruppen überschreitet nicht einen Anteil von 0,09 mol pro mol Epoxidgruppen der gesamten Zusammensetzung. Die Erfindung betrifft auch eine Faser-Matrix-Halbzeug-Zusammensetzung (SMC- oder BMC-Zusammensetzung) mit der genannten Epoxidharz-Zusammensetzung als Matrix-Komponente und darin suspendierten kurzen Verstärkungsfasern mit einer mittleren Länge von 0,3 bis 5,0 cm. Die Faser-Matrix-Halbzeug-Zusammensetzung kann hergestellt werden durch Vermischen der Bestandteile, woraufhin es zur Eindickung der Zusammensetzung kommt. Das so erhaltene eingedickte Produkt (halbfestes Faser-Matrix-Halbzeug) zeichnet sich durch vergleichsweise kurze Reifungszeit und vergleichsweise lange Handhabbarkeit aus. Die Erfindung betrifft auch das entsprechende halbfeste Faser-Matrix-Halbzeug, insbesondere das halbfeste SMC und das entsprechende gehärtete Faser-Matrix-Halbzeug, insbesondere das gehärtete SMC. Die Erfindung betrifft schließlich auch ein Screening-Verfahren zur Identifikation von Epoxidharz-basierten Zusammensetzungen, die geeignet sind für den Einsatz als duroplastische Matrix für die Herstellung von SMC.

## Beschreibung

Die vorliegende Erfindung betrifft ein Epoxidharz-Zusammensetzung umfassend eine Harzkomponente umfassend mindestens ein Epoxidharz und eine Härterkomponente umfassend mindestens eine Imidazolverbindung und mindestens einen latenten Härter, wobei die Epoxidharz-Zusammensetzung geeignet ist als duroplastische Matrix für die Herstellung von Faser-Matrix-Halbzeug (Harzmatte (*Sheet Molding Compound* (SMC)) oder formloses Faser-Matrix-Halbzeug (*Bulk Molding Compound* (BMC))), insbesondere von SMC, ohne Modifikation der üblichen Prozesse zur Herstellung und Verwendung von beispielsweise Polyester-basiertem Faser-Matrix-Halbzeug. In dieser Epoxidharz-Zusammensetzung liegt die Menge der eingesetzten Imidazolverbindungen in einem Bereich von 0,007 bis 0,025 mol pro mol Epoxidgruppen der gesamten Zusammensetzung. Weiter zeichnet sich diese Epoidharz-Zusammensetzung dadurch aus, dass die Gesamtmenge an gegebenenfalls enthaltenen primären Amin-Gruppen einen Anteil von 0,09 mol pro mol Epoxidgruppen der gesamten Zusammensetzung nicht überschreitet. Die Erfindung betrifft auch eine Faser-Matrix-Halbzeug-Zusammensetzung, insbesondere eine SMC-Zusammensetzung, umfassend die genannte Epoxidharz-Zusammensetzung und darin suspendierten kurzen Verstärkungsfasern mit einer mittleren Länge von 0,3 bis 5,0 cm. Die Faser-Matrix-Halbzeug-Zusammensetzung kann hergestellt werden durch Vermischen der Bestandteile, woraufhin es zur Eindickung (prä-Härtung) der Zusammensetzung kommt. Das so erhaltene eingedickte Produkt (halbfestes *(semi-solid, pre-cured*) Faser-Matrix-Halbzeug, insbesondere halbfestes *(semi-solid, pre-cured*) SMC) kann einige Tage oder Wochen gelagert werden. Es kann dann unter geeigneten Härtungsbedingungen zum gehärteten (cured) Faser-Matrix-Halbzeug (insbesondere gehärtetes *(cured)* SMC) ausgehärtet werden. Die Erfindung betrifft auch halbfestes Faser-Matrix-Halbzeug, insbesondere halbfestes *(semi-solid, pre-cured*) SMC und gehärtetes Faser-Matrix-Halbzeug, insbesondere gehärtetes (*cured*) SMC. Die Erfindung betrifft schließlich auch ein Screening-Verfahren zur Identifikation von Epoxidharz-basierten Zusammensetzungen, die geeignet sind für den Einsatz als duroplastische Matrix für die Herstellung von SMC.

Die Verwendung von SMC basierten Formverfahren hat im Verlauf der letzten Jahre eine weite Verbreitung erfahren, insbesondere in der Automobil-Industrie (Stoßdämpfer, Kofferraumdeckel, usw.) und auch in der Elektroindustrie (Gussteile, Niedervoltanwendungen, usw.). Die bei dieser Technik am häufigsten verwendeten Harze sind ungesättigte Polyesterharze. Für die Vernetzung solcher Harze wird ein reaktives Monomer, üblicherweise ein Vinylmonomer und insbesondere Styrol-Monomer verwendet.

In dem konventionellen Verfahren wird eine Lösung aus ungesättigtem, carboxyl-terminiertem Polyester in dem Vinylmonomer (z.B. Styrol) mit einem Peroxid oder einem anderem Initiator, einem Verdickungsmittel wie Magnesiumoxid und einem Füllstoff wie Kalziumcarbonat oder Tonerde vermischt. Diese flüssige Mischung wird dann beispielsweise mit Faser- oder Glasfaserstücken zwischen zwei Folien (bspw. aus Polyethylen oder Polyamid) gemischt, wobei Luftblasen mit Quetschrollen entfernt werden. Während weniger Tage steigt die Viskosität von einem Anfangswert von üblicherweise 0,01 bis 100 Pa*sec auf einen Wert an, der üblicherweise im Bereich von 30.000 bis 150.000 Pa*sec liegt. Der Viskositätsanstieg wird bewirkt durch die Reaktion der Carboxy-Endgruppen des Polyesters mit dem Verdickungsmittel. Im Fall von Magnesiumoxid als Verdickungsmittel werden polymere Magnesiumcarbonate gebildet. Die Viskosität erreicht ein Plateau nachdem das Verdickungsmittel aufgebraucht ist. Diese halbfeste Polyester-basierte SMC-Zusammensetzung hat dann eine nicht-klebrige, lederartige Konsistenz, die geeignet ist für das Einlegen in eine Pressform. Die Viskosität des eingedickten Produkts sollte über einen Zeitraum von vorzugsweise mindestens drei Monaten mehr oder weniger konstant bleiben, dem Verarbeitungsfenster für diese Polyester-basierte SMC-Zusammensetzung.

Wenn die Viskosität zu gering ist, spritzt flüssiges Harz während der Ausformung aus der Form. Wenn dagegen die Viskosität zu hoch ist, wird das SMC Brett-artig, ist daher nur schwer in die Form einzulegen und ist eventuell nicht ausreichend fließfähig, um die Form vollständig auszufüllen. Die Härtung der Polyester-basierten eingedickter SMC-Zusammensetzung erfolgt dann durch Polymerisation der ungesättigten Bindungen initiiert durch die Peroxide, typischerweise binnen von 2 bis 10 min bei Temperaturen von 120 bis 180°C.

Nachteilig an der den bekannten oben beschriebenen Polyester-basierten SMC-Zusammensetzungen ist die Verwendung von Styrol als Reaktivverdünner. Styrol kann aus den gealterten eingedickten Polyester-basierten SMC-Zusammensetzungen entweichen und stellt somit ein Gesundheitsrisiko dar, zumal es heutzutage als relativ gesundheitsgefährdende Substanz eingestuft wird. In der Vergangenheit wurde vorgeschlagen Styrol durch Isocyanate zu ersetzen, doch diese sind nur leicht weniger gesundheitsgefährdend als Styrol und somit keine ideale Lösung für das Problem.

Ein weiteres Problem von bekanntem Polyester-basierten SMC ist, dass sich die daraus hergestellten Teile leicht verziehen. Um dem entgegenzuwirken werden üblicherweise thermoplastische Additive beigefügt (z.B. PS oder PVA). Solche Additive haben jedoch eine nachteilige Wirkung auf die Viskosität und die mechanischen Eigenschaften.

WO 98/22527 A1 beschreibt Epoxidharz-basierte SMC-Zusammensetzungen umfassend ein Epoxidharz, eine Carbonsäure oder ein Anhydride davon als Verdickungsmittel, einen latenten Härter und optional ein Katalysator für die Härtungsreaktion. Nachteilig an den dort beschriebenen Zusammensetzungen ist die vergleichsweise lange Reifungszeit, insbesondere für eine weitere Verarbeitung, bei der die Zusammensetzung unter Druck in einer Form verpresst und ausgehärtet wird.

GB 2462996 A1 offenbart Epoxidharz-Matrizes für die Herstellung von Prepregs, die ein Epoxidharz, ein weiteres Harzmaterial, ein Amin als Verdickungsmittel (B-staging), einen latenten Härter und einen Katalysator oder Beschleuniger für die Härtung beinhaltet. Nachteilig an der dort beschriebenen Zusammensetzung ist die vergleichsweise kurze Zeit ab Vermischen der Bestandteile, während der die Zusammensetzung noch eine ausreichend flexible Konsistenz behalten um die Handhabbarkeit zu erleichtern.

CN 102337007 B offenbart Epoxidharz-basiertes SMC auf Basis von Erdalkalimetalloxiden, Erdaklaimetallhydroxiden, Isocyanat-Verbindungen oder Alkoholen als Verdickungsmittel.

ES 2303769 B offenbart Zusammensetzungen aus Epoxidharz, Kettenverlängerer, latentem Härter, Härtungsbeschleuniger und Additiv insbesondere für die Herstellung von Prepregs, wobei als Kettenverlängerer insbesondere Amine, Aminaddukte, Polycarbonsäuren, Polycarbonsäureanhydride, Disulfide, Thiole, Polythiole, Polysuldife, Polyphenole, Polyamine und Polyamide genannt werden.

Wünschenswert wäre die Bereitstellung einer Epoxidharz-basierten SMC- oder BMC-Zusammensetzung, die möglichst schnell nach der Herstellung ein ausreichend langes Zeitfenster für die Verarbeitbarkeit erreicht, in dem die Viskosität unter Härtungsbedingungen (bspw. Härtungstemperatur von 140°C) ausreichend niedrig wird (ausreichende Fließfähigkeit für vollständiges Ausfüllen der Form) aber gleichzeitig hoch genug bleibt, sodass die Epoxidharz-Matrix während der Ausformung (insbesondere Verpressung) nicht aus der Form herausspritzt (insbesondere bei Verarbeitung unter Druck) oder es zu einer Trennung von Verstärkungsfasern und Matrix kommt. Zusätzlich soll die Epoxidharz-basierte SMC- oder BMC-Zusammensetzung so lang wie möglich eine ausreichend flexible Konsistenz behalten, um die Handhabbarkeit (bspw. Bevorratung des SMC in Form von Rollen; Einlegen des SMC in die Pressform) zu erleichtern.

Entsprechend betrifft die vorliegende Erfindung eine Epoxidharz-Zusammensetzung umfassend eine Harzkomponente (A) umfassend mindestens ein Epoxidharz (A1) und eine Härterkomponente (B) umfassend mindestens eine Imidazolverbindung (B1) und mindestens einen latenten Härter (B2), wobei die Menge der eingesetzten Imidazolverbindungen (B1) in einem Bereich von 0,007 bis 0,025 mol pro mol Epoxidgruppen der gesamten Zusammensetzung liegt, und wobei die Gesamtmenge an gegebenenfalls enthaltenen primären Amin-Gruppen einen Anteil von 0,09 mol pro mol Epoxidgruppen der gesamten Zusammensetzung nicht überschreitet.

Die Erfindung betrifft auch eine Faser-Matrix-Halbzeug-Zusammensetzung umfassend eine Epoxidharz-Zusammensetzung (Matrix-Komponente) enthaltend eine Harzkomponente (A), die mindestens ein Epoxidharz (A1) umfasst, und eine Härterkomponente (B), die mindestens eine Imidazolverbindung (B1) und mindestens einen latenten Härter (B2) umfasst, und umfassend kurze Verstärkungsfasern (C) mit einer mittleren Länge von 0,3 bis 5,0 cm (Faser-Komponente), die in der Epoxidharz-Zusammensetzung (Matrix-Komponente) suspendiert sind, wobei die Menge der eingesetzten Imidazolverbindungen (B1) in einem Bereich von 0,007 bis 0,025 mol pro mol Epoxidgruppen der gesamten Zusammensetzung liegt, und wobei die Gesamtmenge an gegebenenfalls enthaltenen primären Amin-Gruppen einen Anteil von 0,09 mol pro mol Epoxidgruppen der gesamten Zusammensetzung nicht überschreitet. Faser-Matrix-Halbzeug-Zusammensetzung im Sinne der vorliegenden Erfindung sind SMC-Zusammensetzungen oder BMC-Zusammensetzungen, vorzugsweise SMC-Zusammensetzungen, wobei die kurzen Verstärkungsfasern (C) bei SMC-Zusammensetzungen vorzugsweise eine mittleren Länge von 1,2 bis 5,0 cm und bei BMC-Zusammensetzungen vorzugsweise eine mittleren Länge von 0,3 bis 2,5 cm aufweisen. Der Anteil der kurzen Verstärkungsfasern (C) in der erfindungsgemäßen Faser-Matrix-Halbzeug-Zusammensetzung beträgt üblicherweise mindestens 10 Gew.-% bezogen auf die gesamte Faser-Matrix-Halbzeug-Zusammensetzung.

Eigenschaften und Bezeichnungen von SMC und BMC sind in der Norm DIN EN 14598 geregelt.

Das Epoxidharz (A1) gemäß dieser Erfindung besitzt üblicherweise 2 bis 10, bevorzugt 2 bis 6, ganz besonders bevorzugt 2 bis 4 und insbesondere 2 Epoxidgruppen. Bei den Epoxidgruppen handelt es sich insbesondere um Glycidylethergruppen, wie sie bei der Umsetzung von Alkoholgruppen mit Epichlorhydrin entstehen. Bei den Epoxidharzen kann es sich um niedermolekulare Verbindungen, welche im Allgemeinen ein mittleres Molgewicht (Mn) kleiner 1.000 g/mol haben oder um höhermolekulare Verbindungen (Polymere) handeln. Solche polymeren Epoxidharze haben bevorzugt einen Oligomerisierungsgrad von 2 bis 25, besonders bevorzugt von 2 bis 10 Einheiten. Es kann sich um aliphatische, auch cycloaliphatische Verbindungen, oder um Verbindungen mit aromatischen Gruppen handeln. Insbesondere handelt es sich bei den Epoxidharzen um Verbindungen mit zwei aromatischen oder aliphatischen 6-Ringen oder deren Oligomere. Technisch von Bedeutung sind Epoxidharze, die durch Umsetzung des Epichlorhydrins mit Verbindungen, welche mindestens zwei reaktive H-Atome haben, insbesondere mit Polyolen, erhältlich sind. Von besonderer Bedeutung sind Epoxidharze, die durch Umsetzung des Epichlorhydrins mit Verbindungen, welche mindestens zwei, vorzugsweise zwei Hydroxylgruppen und zwei aromatische oder aliphatische 6-Ringe enthalten, erhältlich sind. Als Beispiele für derartige erfindungsgemäße Epoxidharze (A1) seien insbesondere Bisphenol A und Bisphenol F, sowie hydriertes Bisphenol A und Bisphenol F genannt - die entsprechenden Epoxidharze sind die Diglycidylether von Bisphenol A oder Bisphenol F, oder hydriertem Bisphenol A oder Bisphenol F. Als Epoxidharz (A1) gemäß dieser Erfindung wird üblicherweise Bisphenol-A-diglycidylether (DGEBA) verwendet. Unter Bisphenol-A-diglycidylether (DEGBA) und Bisphenol-F-diglycidylether (DGEBF) sind erfindungsgemäß sowohl die entsprechenden Monomere als auch die entsprechenden oligomeren Varianten zu verstehen. Vorzugsweise ist das erfindungsgemäße Epoxidharz (A1) ein Diglycidylether von monomerem oder oligomerem Diol. Dabei ist das Diol vorzugsweise ausgewählt aus der Gruppe bestehend aus Bisphenol A oder Bisphenol F, oder hydriertem Bisphenol A oder Bisphenol F, und der Oligomerisierungsgrad des oligomeren Diols ist vorzugsweise 2 bis 25, besonders bevorzugt von 2 bis 10 Einheiten. Geeignete Epoxidharze (A1) gemäß dieser Erfindung sind auch Tetraglycidyl-Methylendianilin (TGMDA) und Triglycidylaminophenol oder Gemische davon. In Betracht kommen auch Umsetzungsprodukte des Epichlorhydrins mit anderen Phenolen, z.B. mit Kresolen oder Phenol-aldehyd-adukten, wie Phenolformaldehydharzen, insbesondere Novolaken. Geeignet sind auch Epoxidharze, welche sich nicht vom Epichlorhydrin ableiten. In Betracht kommen z.B. Epoxidharze, welche Epoxidgruppen durch Umsetzung mit Glycidyl(meth)acrylat enthalten. Vorzugsweise werden erfindungsgemäß Epoxidharze (A1) oder Gemische davon eingesetzt, die bei Raumtemperatur (25°C) flüssig sind, insbesondere mit einer Viskosität in einem Bereich von 8.000 bis 12.000 Pa*sec . Das Epoxid-Äquivalenzgewicht (EEW) gibt die durchschnittlich Masse des Epoxidharzes in g pro mol Epoxidgruppe an. Vorzugsweise haben die erfindungsgemäßen Epoxidharze (A1) einen EEW in einem Bereich von 150 bis 250, insbesondere von 170 bis 200.

In einer besonderen Ausführungsform der Erfindung wird als Epoxidharz (A1) eine Mischung von verschiedenen Epoxidharzen eingesetzt. Eine bevorzugte Mischung ist die Kombination aus DGEBA und Epoxid-Novolak-Harzen, vorzugsweise in einem Gewichtsverhältnis von 50 zu 80 bis 50 zu 20.

In einer besonderen Ausführungsform der Erfindung wird als Epoxidharz (A1) ein einzelnes Epoxidharz, bspw. DGEBA, eingesetzt.

Vorzugsweise besteht die erfindungsgemäße Epoxidharz-Zusammensetzung (Matrix-Komponente ohne Verstärkungsfasern) zu mindestens 30 Gew.-% insbesondere zu mindestens 40 Gew.-% aus Epoxidharz (A1).

In einer besonderen Ausführungsform der Erfindung umfasst die Epoxidharz-Zusammensetzung bzw. die Faser-Matrix-Halbzeug-Zusammensetzung als weiteren Bestandteil der Harzkomponente (A) neben dem Epoxidharz (A1) einen Reaktivverdünner (A2). Reaktivverdünner (A2) im Sinne der Erfindung sind Verbindungen, die die Anfangsviskosität der Epoxidharz-Zusammensetzung bzw. der daraus hergestellten Faser-Matrix-Halbzeug-Zusammensetzung herabsetzen und im Verlauf der Härtung dieser Zusammensetzung mit dem sich ausbildenden Netzwerk aus Epoxidharz und Härter eine chemische Bindung eingehen. Bevorzugte Reaktivverdünner (A2) im Sinne dieser Erfindung sind niedermolekulare organische, vorzugsweise aliphatische Verbindungen mit einer oder mehreren Epoxidgruppen. Erfindungsgemäße Reaktivverdünner (A2) können auch cyclische Carbonate, insbesondere cyclische Carbonate mit 1 bis 10 C-Atomen, beispielsweise Ethylencarbonat, Propylencarbonat, Glycerincarbonat, Butylencarbonat oder Vinylencarbonat, sein. Erfindungsgemäße Reaktivverdünner (A2) sind vorzugsweise ausgewählt aus der Gruppe bestehend aus Ethylencarbonat, Vinylencarbonat, Propylencarbonat, Glycerincarbonat, 1,4-Butandiolbisglycidylether, 1,6-Hexandiolbisglycidylether, Glycidylneodecanoat, Glycidylversatat, 2-Ethylhexylglycidylether, Neopentylglykoldiglycidylether, p-tert-Butylglycidylether, Butylglycidylether, C8-C10- Alkylglycidylether, C12-C14-Alkylglycidylether, Nonylphenylglycidylether, p-tert-Butylphenylglycidylether, Phenylglycidylether, o-Cresylglycidylether, Polyoxypropylenglycoldiglycidylether, Trimethylolpropantriglycidylether, Glycerintriglycidylether, Triglycidylparaaminophenol, Divinylbenzyldioxid und Dicyclopentadiendiepoxid. Sie sind besonders bevorzugt ausgewählt aus der Gruppe bestehend aus 1,4-Butandiolbisglycidylether, 1,6-Hexandiolbisglycidylether, 2-Ethylhexylglycidylether, C8-C10-Alkylglycidylether, C12-C14- Alkylglycidylether, Neopentylglykoldiglycidylether, p-tert-Butylglycidylether, Butylglycidylether, Nonylphenylglycidylether, p-tert-Butylphenylglycidylether, Phenylglycidylether, o-Cresylglycidylether, Trimethylolpropantriglycidylether, Glycerintriglycidylether, Divinylbenzyldioxid und Dicyclopentadiendiepoxid. Sie sind insbesondere ausgewählt aus der Gruppe bestehend aus 1,4-Butandiolbisglycidylether, C8-C10- Alkylmonoglycidylether, C12-C14-Alkylmonoglycidylether, 1,6-Hexandiolbisglycidylether, Neopentylglykoldiglycidylether, Trimethylolpropantriglycidylether, Glycerintriglycidylether, Divinylbenzyldioxid und Dicyclopentadiendiepoxid.

Die erfindungsgemäßen Reaktivverdünner (A2) machen vorzugsweise einen Anteil bis 30 Gew.-%, besonders bevorzugt bis 20 Gew.-%, insbesondere von 1 bis 10 Gew.-% bezogen auf die gesamte Harzkomponente (A) (Epoxidharz (A1) und etwaig eingesetzte Reaktivverdünner (A2)) der Epoxidharz-Zusammensetzung aus.

Die Imidazolverbindung (B1) gemäß dieser Erfindung ist Imidazol selbst oder ein Derivat davon. Vorzugsweise ist die Imidazolverbindung (B1) eine Imidazolverbindung der allgemeinen Formel I 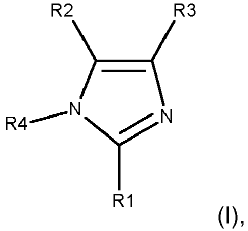 wobei
R1 ein Wasserstoffatom, eine Alkylgruppe, vorzugsweise mit 1 bis 10 C-Atomen, eine Arylgruppe, vorzugsweise mit 3 bis 16 C-Atomen, oder eine Arylalkylgruppe, vorzugsweise mit 4 bis 20 C-Atomen, ist,
R2 und R3 jeweils unabhängig voneinander ein Wasserstoffatom oder eine Alkylgruppe, vorzugsweise mit 1 bis 4 C-Atomen, sind, und
R4 ein Wasserstoffatom, eine Alkylgruppe, vorzugsweise mit 1 bis 4 C-Atomen, eine Benzylgruppe oder eine Aminoalkylgruppe, vorzugsweise mit 2 bis 4 C-Atomen und eine primären Aminogruppe, ist.

Vorzugsweise ist R1 der Imidazolverbindung der allgemeinen Formel I sein Wasserstoffatom, eine Alkylgruppe mit 1 bis 4 C-Atomen, eine Arylgruppe mit 3 bis 7 C-Atomen oder eine Arylalkylgruppe mit 4 bis 10 C-Atomen. Besonders bevorzugt ist R1 ein Wasserstoffatom oder eine Alkylgruppe mit 1 bis 4 C-Atomen.

In einer besonderen Ausführungsform der Erfindung ist R4 der Imidazolverbindung der allgemeinen Formel I ein Wasserstoffatom, eine Alkylgruppe mit 1 bis 4 C-Atomen oder eine Benzylguppe. Beispiele für solche Imidazolverbindungen sind Imidazol, 1-Methylimidazol, 1-Ethylimidazol, 2-Methylimidazol, 2-Ethylimidazol, 2-Undecylimidazol, 2-Heptadecylimidazol, 2-Phenylimidazol, 1,2-Dimethylimidazol, 2-Ethyl-4-methylimidazol, 2-Phenyl-4-methylimidazol, 1-Benzyl-2-phenylimidazol, 1-Benzyl-2-methylimidazol.

In einer besonderen Ausführungsform der Erfindung ist die Imidazolverbindung der Formel I ein Aminoalkylimidazol, wobei R4 eine Aminoalkylgruppe, vorzugsweise mit 2 bis 4 C-Atomen und einer primären Aminogruppe. Beispiele für solche Aminoalkylimidazole sind 1-(2-Aminoethyl)-2-methylimidazol, 1-(2-Aminoethyl)-2-ethylimidazol, 1-(3-Aminopropyl)imidazol, 1-(3-Amino-propyl)-2-methylimidazol, 1-(3-Aminopropyl)-2-ethylimidazol, 1-(3-Aminopropyl)-2-phenylimidazol, 1-(3-Aminopropyl)-2-heptadecylimidazol, 1-(3-Aminopropyl)-2,4-dimethylimidazol, 1-(3-Aminopropyl)-2,5-dimethylimidazol, 1-(3-Aminopropyl)-2-ethy-1-4-methylimidazol, 1-(3-Aminopropyl)-2-ethyl-5-methylimidazol, 1-(3-Aminopropyl)-4-methyl-2-undecylimidazol, und 1-(3-Aminopropyl)-5-methyl-2-undecylimidazol. Unter diesen Verbindungen ist 1-(3-Amino-propyl)imidazol (API) besonders bevorzugt.

Alkylgruppen im Sinne der Erfindung besitzen 1 bis 20 C-Atome. Sie können linear, verzweigt oder cyclisch sein. Sie können gesättigt oder ungesättigt (auch mehrfach ungesättigt) sein. Bevorzugt sind sie gesättigt. Sie weisen keine Substituenten mit Heteroatomen auf. Heteroatome sind alle Atome außer C- und H-Atome.

Aryl-Gruppen im Sinne der Erfindung besitzen 3 bis 20 C-Atome. Das aromatische Ringsystem kann 1 oder 2 Heteroatome, vorzugsweise Stickstoff und/oder Sauerstoff, pro Ring umfassen Sie weisen keine Substituenten mit Heteroatomen auf. Heteroatome sind alle Atome außer C-und H-Atome.

In den erfindungsgemäßen härtbaren Zusammensetzungen (Epoxidharz-Zusammensetzung und Faser-Matrix-Halbzeug-Zusammensetzung) liegt die Gesamtmenge der eingesetzten ein oder mehreren Imidazolverbindungen (B1) in einem Bereich von 0,007 bis 0,025 mol pro mol Epoxidgruppen der gesamten Zusammensetzung, vorzugsweise in einem Bereich von 0,010 bis 0,020 mol pro mol Epoxidgruppen der gesamten Zusammensetzung.

Als latenter Härter (B2) der erfindungsgemäßen Epoxidharz-Zusammensetzung kann jede Verbindung oder Mischungen davon eingesetzt werden, die für diesen Zweck bekannt ist, und die unter Umgebungsbedingungen (Temperatur von 10 bis 50°C bei Normaldruck) nicht nennenswert mit dem eingesetzten Epoxidharz reagiert, die aber bei erhöhter Temperatur (bspw. über 80°C, insbesondere über 120°C) vernetzend mit dem eingesetzten Epoxidharz reagiert. Eine nicht nennenswerte Reaktion des latenten Härters mit dem Epoxidharz ist eine solche, die binnen von 24 h bei Umgebungsbedingungen maximal zu einer Verdopplung der Viskosität der Epoxidharz-Zusammensetzung führt (bspw. keine oder weniger als zweifache Erhöhung der Viskosität bei Raumtemperatur (25°C) innerhalb von 24 h). Härter, die bereits bei niedrigeren Temperaturen mit dem Epoxidharz reagieren, führen zu Produkten (halbfestes Faser-Matrix-Halbzeug (halbfestes SMC oder BMC)) mit einer nicht ausreichend langen Haltbarkeit. Haltbarkeiten von mindestens 5 Tagen, vorzugsweise mindestens 2 Wochen, insbesondere mindestens 1 Monat, ganz besonders bevorzugt mindestens 2 Monate bei Raumtemperatur, sind wünschenswert. Unter Haltbarkeit ist in diesem Zusammenhang der Zeitraum beginnend mit der Herstellung zu verstehen, innerhalb dessen das halbfeste Faser-Matrix-Halbzeug noch zweckmäßig zur Ausformung (bspw. Verpressen) von gehärtetem SMC bzw. BMC eingesetzt werden kann.

Geeignete latente Härter (B2) im Sinne der Erfindung sind beispielsweise quarternäre Phosphonium-Verbindungen sowie Bortrifluorid-Amin-Addukte, insbesondere entsprechende Addukte mit tertären aliphatischen Aminen. Besonders geeignet als latenter Härter (B2) ist Dicyandiamid (DICY), insbesondere in fein gemahlener Form. Es führt zur Härtung des Epoxidharz-Systems bei erhöhter Temperatur, nachdem es geschmolzen ist, wahrscheinlich aufgrund von reaktiven Spaltprodukten. Andere geeignete latente Härter sind beispielsweise aromatische Amine wie 4,4'- oder 3,3'-Diaminodiphenylsulfon, Guanidine wie 1-o-tolyldiguanid, modifizierte Polyamine wie Anchor-32014S (Anchor Chemical UK Ltd, Manchester), Carbonsäure-Hydrazide wie Adipinsäure-Dihydrazid, Isophthalsäure-Dihydrazid oder Anthalinsäure-Hydrazid, Triazin-Derivate wie Benzoguanamin sowie Melamin. Bevorzugter erfindungsgemäßer latenter Härter (B2) ist DICY.

In den erfindungsgemäßen härtbaren Zusammensetzungen (Epoxidharz-Zusammensetzung und Faser-Matrix-Halbzeug-Zusammensetzung) wird latenter Härter (B2) in einer Menge eingesetzt, die ausreicht für die effektive Härtung des halbfesten Faser-Matrix-Halbzeugs, bspw. des halbfesten SMC. Eine effektive Härtung ist bspw. dann gegeben, wenn mindestens 90 %, bevorzugt mindestens 95 %, insbesondere mindestens 98 % der nach dem Eindicken in dem halbfesten Faser-Matrix-Halbzeug noch verbliebenen Epoxidgruppen umgesetzt werden. Üblicherweise werden 0,4 bis 1,2, vorzugsweise 0,6 bis 1,1, besonders bevorzugt 0,8 bis 1,0 Äquivalente des latenten Härters oder der Mischung von latenten Härtern bezogen auf die nach der Eindickung verbliebenen Epoxid-Äquivalente eingesetzt. Im Falle von DICY als latenter Härter (B2) werden üblicherweise 0,05 bis 0,30 mol DICY, vorzugsweise 0,10 bis 0,25 mol DICY bezogen auf die (ursprünglich eingesetzten) mol Epoxidgruppe der härtbaren Zusammensetzung eingesetzt.

Die Imidazolverbindung (B1) bewirkt das Eindicken der erfindungsgemäßen härtbaren Zusammensetzung (Epoxidharz-Zusammensetzung bzw. Faser-Matrix-Halbzeug-Zusammensetzung) hin zum halbfesten Faser-Matrix-Halbzeug und gleichzeitig kann sie auch als Katalysator für die durch den latenten Härter (B2) bewirkte Härtung wirken, insbesondere wenn DICY als latenter Härter (B2) eingesetzt wird.

Die Härterkomponente (B) der erfindungsgemäßen härtbaren Zusammensetzungen (Epoxidharz-Zusammensetzung und Faser-Matrix-Halbzeug-Zusammensetzung) kann neben der Imidazolverbindung (B1) und dem latenten Härter (B2) noch weitere Bestandteile umfassen (optionale Bestandteile der Härterkomponente (B)), die mit den Epoxidgruppen der Harzkomponente reagieren können bzw. Reaktionen dieser Gruppen initiieren, beschleunigen oder katalysieren können.

Bei diesen optionalen Bestandteilen der Härterkomponente (B) handelt es sich beispielsweise um Amine, insbesondere um primäre Amine. Vorzugsweise werden Monoamine oder Polyamine mit ein oder mehreren, insbesondere mit ein oder zwei primären Aminogruppen, als optionale Bestandteile der Härterkomponente (B) eingesetzt. Amine, die als optionaler Bestandteil der Härterkomponente (B) eingesetzt werden können, sind beispielsweise Dimethyldicykan (DMDC), Isophorondiamin (IPDA), Diethylentriamin (DETA), Triethylentetramin (TETA), 1,3-Bis(aminomethyl)cyclohexan (1,3-BAC), Bis(p-aminocyclohexyl)methan (PACM), Methylendianilin (bspw. 4,4'-Methylendianilin), Polyetheramine, wie Polyetheramin D230, Polyaminoamide wie Versamid 140, Diaminodiphenylmethan (DDM), Diaminodiphenylsulfon (DDS), 2,4-Toluoldiamin, 2,6-Toluoldiamin, 2,4-Diamino-1-methylcyclohexan, 2,6-Diamino-1-methylcyclohexan, 1,2-Diaminocyclohexane, 2,4-Diamino-3,5-diethyltoluol, 2,6-Diamino-3,5-diethyltoluol, 1,2-Diaminobenzol, 1,3-Diaminobenzol, 1,4-Diaminobenzol, Diaminodiphenyloxid, 3,3',5,5'-Tertra-methyl-4,4'-diaminodiphenyl, 3,3'-Dimethyl-4,4'-diaminodiphenyl, 1,12-Diaminododecan, 1,10-Diaminodecan, 1,2-Propandiamin, 1,3-Propandiamin, 2,2'-Oxy-bis(ethylamin), 3,3'-Dimethyl-4,4'-diaminodicyclohexylmethan, 4-Ethyl-4-methylamino-1-octylamin, Ethylendiamin, Hexamethylendiamin, eine Mischung aus 4-Methylcyclohexane-1,3-diamine und 2-Methylcyclohexane-1,3-di-amine (MDACH), Menthendiamin, Xylylendiamin, N-Aminoethylpiperazin, Neopentandiamin, Norbornandiamin, Octanmethylendiamin, 4,8-Diamino-tricyclo[5.2.1.0]decan, Trimethylhexamethylendiamin, und Piperazin, sowie Arylmonoamine wie Anilin, cycloaliphatische Monoamine wie Cyclohexylamin und Alkylmonoamine wie 1-Propylamin.

Primäre Amine können, wenn sie Bestandteil der erfindungsgemäßen Epoxidharz-Zusammensetzung bzw. der erfindungsgemäßen Faser-Matrix-Halbzeug-Zusammensetzung sind, zu deren Eindickung, bzw. zu der Eindickung der entsprechenden Faser-Matrix-Halbzeug-Zusammensetzung (zum halbfesten Faser-Matrix-Halbzeug, bspw. zum halbfesten SMC) beitragen. Dabei ist es entscheidend, dass die Gesamtmenge an primären Amin-Gruppen einen Anteil von 0,09 mol pro mol Epoxidgruppen der gesamten Zusammensetzung nicht überschreitet, damit ein ausreichend langes Zeitfenster für die Handhabbarkeit bzw. die Verarbeitbarkeit des halbfesten Faser-Matrix-Halbzeugs erreicht wird. In einer besonderen Ausführungsform der Erfindung umfasst die Epoxidharz-Zusammensetzung bzw. die Faser-Matrix-Halbzeug-Zusammensetzung primäre Amine in einer solchen Menge, dass die Gesamtmenge an primären Amin-Gruppen in einem Bereich von 0,01 bis 0,05 mol pro mol Epoxidgruppen der gesamten Zusammensetzung liegt. In einer weiteren besonderen Ausführungsform der Erfindung ist die Epoxidharz-Zusammensetzung bzw. die Faser-Matrix-Halbzeug-Zusammensetzung im Wesentlichen frei von primären Aminen.

Bei den optionalen Bestandteilen der Härterkomponente (B) handelt es sich beispielsweise um Katalysatoren und/oder Beschleuniger der Härtungsreaktion. Solche Katalystoren und/oder Beschleuniger sind beispielsweise Harnstoffderivate (Urone) wie 1,1-Dimethyl-3-phenylharnstoff (Fenuron) oder 3,3'-(4-Methyl-1,3-phenylen)-bis-(1,1-dimethylharnstoff) und tertiäre Amine wie Triethanolamin, Benzyldimethylamin, 2,4,6-Tris(dimethylaminomethyl)phenol oder Tetramethylguanidin.

In einer besonderen Ausführungsform der Erfindung ist die härtbare Zusammensetzung (Epoxidharz-Zusammensetzung bzw. Faser-Matrix-Halbzeug-Zusammensetzung) im Wesentlichen frei von Vinylmonomeren, insbesondere von Styrol.

In einer besonderen Ausführungsform der Erfindung ist die härtbare Zusammensetzung (Epoxidharz-Zusammensetzung bzw. Faser-Matrix-Halbzeug-Zusammensetzung) im Wesentlichen frei von Lösungsmitteln. Lösungsmittel im Sinne dieser Erfindung sind bei Raumtemperatur flüssige Verbindungen, die geeignet sind, ein oder mehrere Bestandteile der erfindungsgemäßen Epoxidharz-Zusammensetzung zu lösen bzw. zu verdünnen bzw. zu suspendieren, ohne mit den Bestandteilen der Epoxidharz-Zusammensetzung chemisch zu reagieren. Lösungsmittel in diesem Sinn sind beispielsweise Wasser, Diethylether, Isopropylalkohol, Methylethylketon, Ethylacetat, sowie Kohlenwasserstoffe wie Toluol oder Xylol und chlorierte Kohlenwasserstoffe wie Dichlormethan oder Tetrachlomethan. Lösungsmittel in diesem Sinn ist insbesondere Wasser.

In einer besonderen Ausführungsform der Erfindung ist die härtbare Zusammensetzung (Epoxidharz-Zusammensetzung bzw. Faser-Matrix-Halbzeug-Zusammensetzung) im Wesentlichen frei von Carbonsäuren und Carbonsäure-Anhydriden.

In einer besonderen Ausführungsform der Erfindung ist die härtbare Zusammensetzung (Epoxidharz-Zusammensetzung bzw. Faser-Matrix-Halbzeug-Zusammensetzung) im Wesentlichen frei von nicht-Epoxid-basierten härtbaren Harzen und nicht-Epoxid-basierten thermoplastischem Materialien. Nicht-Epoxid-basierte härtbaren Harze und thermoplastischem Materialien sind insbesondere Phenolharze, Polyethersulfone, Polyvinylformaldehyd-Harze und Polyamide.

Unter dem Begriff "im Wesentlichen frei" ist im Rahmen dieser Erfindung ein Anteil von ≤ 1 Gew.-%, bevorzugt ≤ 0,1 Gew.-%, besonders bevorzugt "unterhalb der Detektionsschwelle" bezogen auf die entsprechende gesamte Zusammensetzung zu verstehen.

Kurze Verstärkungsfasern (C) im Sinne der vorliegenden Erfindung sind kurze Faserstücke mit einer mittleren Länge von 0,3 bis 5,0 cm. Für den Einsatz in SMC werden vorzugsweise Faserstücke mit einer mittleren Länge von 1,2 bis 5,0 cm und für den Einsatz in BMC werden vorzugsweise Faserstücke mit einer mittleren Länge von 0,3 bis 2,5 cm eingesetzt. Die Fasern sind üblicherweise aus Glas oder Mineralwolle, aber auch Nylon-Fasern, Aramid-Fasern oder Carbon-Fasern können als erfindungsgemäße Verstärkungsfasern eingesetzt werden. Bevorzugt handelt es sich bei den Verstärkungsfasern (C) um Glasfaserstücke und/oder Carbon-Faserstücke, insbesondere handelt es sich bei den kurzen Verstärkungsfasern (C) um Glasfaserstücke. Vorzugsweise weist die mittlere Länge der kurzen Verstärkungsfasern (C) eine Standardabweichung von maximal 10 %, bevorzugt maximal 5 %, insbesondere maximal 2 % der mittleren Länge auf.

Die erfindungsgemäße Faser-Matrix-Halbzeug-Zusammensetzung enthält üblicherweise Verstärkungsfasern (C) in einem Anteil von 10 bis 75 Gew.-%, vorzugsweise 25 bis 65 Gew.-% bezogen auf die gesamte Faser-Matrix-Halbzeug-Zusammensetzung.

Die erfindungsgemäße härtbare Zusammensetzung (Epoxidharz-Zusammensetzung bzw. Faser-Matrix-Halbzeug-Zusammensetzung) kann auch weitere Zusätze wie beispielsweise Füllstoffe, Verdünner, Pigmente, Farbstoffe, Trennmittel, Zähigkeit erhöhende Agenzien (*toughener),* Fließmittel, Benetzungsmittel, schaumhemmende Agenzien (*anti-foamer*) oder flammhemmende Agenzien enthalten. Solche Zusätze werden üblicherweise in funktioneller Menge zugegeben, also bspw. ein Pigment in einer Menge, die zu der gewünschten Farbe für die Zusammensetzung führt.

Geeignete Füllstoffe sind beispielsweise Aluminiumoxid, Aluminiumhydroxid, Silikate, modifiziertes Montmorillonit, Kalziumcarbonat oder Tonerde. Üblicherweise werden Füllstoffe in einer Menge von 0 bis 200 Gew.-% bezogen auf die gesamte härtbare Zusammensetzung ohne Füllstoff eingesetzt.

Für die Herstellung von SMC oder BMC werden die Bestandteile der Faser-Matrix-Halbzeug-Zusammensetzung mit einander in Kontakt gebracht und vermischt. Bei der Herstellung von SMC wird diese Mischung plattenförmig in der Regel zwischen zwei Folien aufgebracht. Nach dem Vermischen der Bestandteile kommt es bei Raumtemperatur zu einem Eindicken der Faser-Matrix-Halbzeug-Zusammensetzung. Dieser Prozess ist gekennzeichnet durch eine Erhöhung der Glasübergangstemperatur (Tg) und der Viskosität des Materials. Durch das Eindicken des Materials entsteht das halbfeste Faser-Matrix-Halbzeug (halbfestes SMC oder BMC).

Dabei ist es wichtig, dass dieses Halbzeug bei Raumtemperatur über einen möglichst langen Zeitraum beginnend mit dem Vermischen der Bestandteile handhabbar ist, also eine gewisse Flexibilität aufweist. Insbesondere bei halbfestem SMC, dass üblicherweise als Rollen gelagert wird, ist es wichtig, dass das Material von der Rolle entnommen werden (Abrollbarkeit) und in die für die weitere Verarbeitung (Härtung) benötigte Form (z.B. ebenen Matten oder Platten) gebracht werden kann (Konfektionierbarkeit). Wenn das Material im Verlauf des Eindickens seine Flexibilität verliert, wird die Handhabung schwieriger, es lässt sich aber in der Regel noch verarbeiten (Verpressen in einer Pressform). Im Rahmen der vorliegenden Erfindung wurde festgestellt, dass eine ausreichende Handhabbarkeit bzw. Abrollbarkeit für einen Zeitraum gewährleistet ist, während dem die entsprechende Epoxidharz-Zusammensetzung (ohne Verstärkungsfasern) beispielsweise eine Glasübergangstemperatur von 5 °C noch nicht übersteigt (Handhabbarkeitszeitraum). Für die Epoxidharz-Zusammensetzung der erfindungsgemäßen Faser-Matrix-Halbzeug-Zusammensetzung ist dies bei Raumtemperatur für einen Zeitraum von mindestens 3 Tagen, vorzugsweise von mindestens 5 Tagen gegeben.

Gleichzeitig ist es wichtig, dass das Material möglichst schnell den Zustand erreicht, in dem es weiter verarbeitet (ausgehärtet) werden kann. Die Verarbeitung erfolgt in der Regel durch Verpressen des Materials in einer Pressform unter erhöhtem Druck (bspw. 100 bar) und erhöhter Temperatur (bspw. 150°C). Unter diesen Bedingungen sinkt zunächst die Viskosität des halbfesten Faser-Matrix-Halbzeugs ab, sodass das Material gleichmäßig und vollständig die Pressform ausfüllen kann. Gleichzeitig bewirkt der latente Härter und diesen Bedingungen die Aushärtung des Materials und damit einen schnellen Wiederanstieg seiner Viskosität. Dabei ist es wichtig, dass die Viskosität des Materials während dieser Verarbeitung nicht zu stark absinkt, da es andernfalls zur Separation von Harz-Matrix und Verstärkungsfasern und zu einem Herausspritzen des Materials aus der Pressform kommen kann. Im Rahmen der vorliegenden Erfindung wurde festgestellt, dass eine diesbezüglich ausreichende Verarbeitbarkeit (Verpressen des halbfesten Faser-Matrix-Halbzeugs) ab dem Zeitpunkt gewährleistet ist, ab dem beispielsweise eine Probe (in einer Menge von etwa 2 g) der entsprechenden Epoxidharz-Zusammensetzung (ohne Verstärkungsfasern) bei schnellem Erwärmen (0,5°C/sec) auf 140°C eine Viskosität von 1 Pa*sec, gemessen bspw. in einem Rheometer (bspw. Viskosimeter Anton Paar MCR 301, FW3.30 (Platte-Platte-Konfiguration; Durchmesser 25 mm; *gap* 1000 µm, *oscillation, shear rate* 100 Hz)), nicht mehr unterschreitet. Die Zeit, die die Zusammensetzung bis zu diesem Zeitpunkt bei einer bestimmten Temperatur benötigt, gerechnet ab dem Vermischen der Bestandteile, ist die Reifungszeit. Für die Epoxidharz-Zusammensetzung der erfindungsgemäßen Faser-Matrix-Halbzeug-Zusammensetzung ist eine Reifungszeit bei Raumtemperatur von maximal 14 Tagen, vorzugsweise von maximal 10 Tagen, besonders bevorzugt maximal 8 Tagen, insbesondere maximal 6 Tagen gegeben.

Idealerweise ist der Handhabbarkeitszeitraum für eine härtbare Zusammensetzung länger als ihre Reifungszeit, sodass das Verpressen des halbfesten Faser-Matrix-Halbzeugs, insbesondere des halbfesten SMC unmittelbar auf dessen Konfektionierung folgen kann.

Vorzugsweise weisen die härtbaren Zusammensetzungen auch ein möglichst langes Zeitfenster für die Verarbeitbarkeit auf. Dieses Zeitfenster beginnt mit dem Abschluss der Reifungszeit und endet wenn die Viskosität während der Verarbeitung (Verpressen) nicht mehr ausreichend absinkt um ein vollständiges und gleichmäßiges Ausfüllen der Pressform zu gewährleisten. Im Rahmen der vorliegenden Erfindung wurde festgestellt, dass eine diesbezüglich ausreichende Verarbeitbarkeit (Verpressen des halbfesten *(semi-solid, pre-cured*) Faser-Matrix-Halbzeugs) solange gewährleistet ist, solange beispielsweise eine Probe (in einer Menge von etwa 2 g) der entsprechende Epoxidharz-Zusammensetzung (ohne Verstärkungsfasern) bei schnellem Erwärmen (0,5°C/sec) auf 140°C eine Viskosität von 1.000 Pa*sec gemessen in einem Rheometer (bspw. Viskosimeter Anton Paar MCR 301, FW3.30 (Platte-Platte-Konfiguration; Durchmesser 25 mm; *gap* 1000 µm, *oscillation, shear rate* 100 Hz)) noch unterschreitet.

Die Glasübergangstemperatur ist bestimmbar mittels Differential Kalorimetrie (DSC) gemäß der Norm DIN 53765.

Gegenstand der vorliegenden Erfindung ist auch ein Verfahren zur Herstellung einer erfindungsgemäßen Faser-Matrix-Halbzeug-Zusammensetzung (SMC- oder BMC-Zusammensetzung), insbesondere einer SMC-Zusammensetzung, umfassend das Vermischen der Bestandteile der erfindungsgemäßen Faser-Matrix-Halbzeug-Zusammensetzung bei einer Temperatur, bei der das eingesetzte Epoxidharz (A1) noch nicht nennenswert mit dem eingesetzten latenten Härter (B2) reagiert, vorzugsweise bei einer Temperatur von 10 bis 50°C. Eine nicht nennenswerte Reaktion des latenten Härters mit dem Epoxidharz ist eine solche, die binnen von 24 h bei Umgebungsbedingungen maximal zu einer Verdopplung der Viskosität der Epoxidharz-Zusammensetzung führt (bspw. keine oder weniger als zweifache Erhöhung der Viskosität bei Raumtemperatur (25°C) innerhalb von 24 h).

Gegenstand der vorliegenden Erfindung ist auch ein Verfahren zur Herstellung von reifem halbfestem Faser-Matrix-Halbzeug (reifem halbfestem SMC oder BMC) umfassend das Bereitstellen einer erfindungsgemäßen Faser-Martix-Halbzeug-Zusammensetzung (SMC- oder BMC-Zusammensetzung) und das Reifen der Zusammensetzung bei einer Temperatur, bei der das eingesetzte Epoxidharz (A1) noch nicht nennenswert mit dem eingesetzten latenten Härter (B2) reagiert, vorzugsweise bei einer Temperatur von 10 bis 50°C mindestens für die Dauer der Reifungszeit. Während des Reifens der Faser-Martix-Halbzeug-Zusammensetzung zum halbfesten Faser-Matrix-Halbzeug bewirkt die Imidazolverbindung (B1) ein Eindicken der Zusammensetzung. Eine nicht nennenswerte Reaktion des latenten Härters mit dem Epoxidharz ist eine solche, die binnen von 24 h bei Umgebungsbedingungen maximal zu einer Verdopplung der Viskosität der Epoxidharz-Zusammensetzung führt (bspw. keine oder weniger als zweifache Erhöhung der Viskosität bei Raumtemperatur (25°C) innerhalb von 24 h). Die Reifungszeit ist die Zeit beginnend mit der Bereitstellung der Faser-Martix-Halbzeug-Zusammensetzung bis zu dem Zeitpunkt, ab dem eine Probe von 2 g der entsprechenden Epoxidharz-Zusammensetzung bei schnellem Erwärmen von 0,5°C/sec auf 140°C eine Viskosität von 1 Pa*sec (gemessen bspw. in einem Rheometer (bspw. Viskosimeter Anton Paar MCR 301, FW3.30 (Platte-Platte-Konfiguration; Durchmesser 25 mm; *gap* 1000 µm, *oscillation, shear rate* 100 Hz))) nicht mehr unterschreitet.

Gegenstand der vorliegenden Erfindung ist insbesondere ein Verfahren zur Herstellung von reifem halbfestem SMC umfassend das Bereitstellen einer erfindungsgemäßen SMC-Zusammensetzung, das Formen von Schichten aus dieser Zusammensetzung und das Reifen der Zusammensetzung bei einer Temperatur, bei der das eingesetzte Epoxidharz (A1) noch nicht nennenswert mit dem eingesetzten latenten Härter (B2) reagiert, vorzugsweise bei einer Temperatur von 10 bis 50°C mindestens für die Dauer der Reifungszeit. Eine nicht nennenswerte Reaktion des latenten Härters mit dem Epoxidharz ist eine solche, die binnen von 24 h bei Umgebungsbedingungen maximal zu einer Verdopplung der Viskosität der Epoxidharz-Zusammensetzung führt (bspw. keine oder weniger als zweifache Erhöhung der Viskosität bei Raumtemperatur (25°C) innerhalb von 24 h). Die Reifungszeit ist die Zeit beginnend mit der Bereitstellung der Faser-Matrix-Halbzeug-Zusammensetzung bis zu dem Zeitpunkt, ab dem eine Probe von 2 g der entsprechenden Epoxidharz-Zusammensetzung bei schnellem Erwärmen von 0,5°C/sec auf 140°C eine Viskosität von 1 Pa*sec (gemessen bspw. in einem Rheometer (bspw. Viskosimeter Anton Paar MCR 301, FW3.30 (Platte-Platte-Konfiguration; Durchmesser 25 mm; *gap* 1000 µm, *oscillation, shear rate* 100 Hz))) nicht mehr unterschreitet. Üblicherweise wird die Epoxidharz-Zusammensetzung (Matrix-Komponente) mit den kurzen Verstärkungsfasern (C) zwischen zwei Folien (in der Regel wiederentfernbare Folien bspw. aus Polyethylen oder Polyamid) miteinander vermischt und zu einer schichtförmigen SMC-Zusammensetzung geformt. Üblicherweise werden Luftblasen mit Hilfe von Quetschrollen entfern. Vorzugsweise liegt die Viskosität der Epoxidharz-Zusammensetzung (Matrix-Komponente) zu Beginn des Vermischens mit den kurzen Verstärkungsfasern (C) in einem Bereich von 5 bis 50 Pa*sec um die Imprägnierung der Verstärkungsfasern mit der Epoxidharz-Zusammensetzung (Matrix-Komponente) zu verbessern. Vorzugsweise hat die schichtförmige SMC-Zusammensetzung bereits kurz nach ihrer Herstellung eine ausreichende Viskosität erreicht, bei der eine Separation der kurzen Verstärkungsfasern (C) von der Harz-Matrix (Epoxidharz-Zusammensetzung) minimiert ist.

Gegenstand der vorliegenden Erfindung ist auch das reife halbfeste (Faser-Matrix-Halbzeug, herstellbar oder hergestellt durch das Bereitstellen einer erfindungsgemäßen Faser-Matrix-Halbzeug-Zusammensetzung (SMC- oder BMC-Zusammensetzung) und das Reifen der Zusammensetzung bei einer Temperatur, bei der das eingesetzte Epoxidharz (A1) noch nicht nennenswert mit dem eingesetzten latenten Härter (B2) reagiert, vorzugsweise bei einer Temperatur von 10 bis 50°C, mindestens für die Dauer der Reifungszeit. Eine nicht nennenswerte Reaktion des latenten Härters mit dem Epoxidharz ist eine solche, die binnen von 24 h bei Umgebungsbedingungen maximal zu einer Verdopplung der Viskosität der Epoxidharz-Zusammensetzung führt (bspw. keine oder weniger als zweifache Erhöhung der Viskosität bei Raumtemperatur (25°C) innerhalb von 24 h). Die Reifungszeit ist die Zeit beginnend mit der Bereitstellung der Faser-Matrix-Halbzeug-Zusammensetzung bis zu dem Zeitpunkt, ab dem eine Probe von 2 g der entsprechenden Epoxidharz-Zusammensetzung bei schnellem Erwärmen von 0,5°C/sec auf 140°C eine Viskosität von 1 Pa*sec (gemessen bspw. in einem Rheometer (bspw. Viskosimeter Anton Paar MCR 301, FW3.30 (Platte-Platte-Konfiguration; Durchmesser 25 mm; *gap* 1000 µm, *oscillation, shear rate* 100 Hz))) nicht mehr unterschreitet.

Gegenstand der vorliegenden Erfindung ist insbesondere auch das reife halbfeste SMC, herstellbar oder hergestellt durch das Bereitstellen einer erfindungsgemäßen SMC-Zusammensetzung, das Formen von Schichten aus dieser Zusammensetzung und das Reifen der Zusammensetzung bei einer Temperatur, bei der das eingesetzte Epoxidharz (A1) noch nicht nennenswert mit dem eingesetzten latenten Härter (B2) reagiert, vorzugsweise bei einer Temperatur von 10 bis 50°C, mindestens für die Dauer der Reifungszeit, wobei vorzugsweise die Epoxidharz-Zusammensetzung (Matrix-Komponente) mit den kurzen Verstärkungsfasern (C) zwischen zwei Folien (in der Regel wiederentfernbare Folien bspw. aus Polyethylen oder Polyamid) miteinander vermischt und zu einer schichtförmigen SMC-Zusammensetzung geformt wird, und wobei vorzugsweise die Viskosität der Epoxidharz-Zusammensetzung (Matrix-Komponente) zu Beginn des Vermischens mit den kurzen Verstärkungsfasern (C) in einem Bereich von 5 bis 50 Pa*sec liegt. Eine nicht nennenswerte Reaktion des latenten Härters mit dem Epoxidharz ist eine solche, die binnen von 24 h bei Umgebungsbedingungen maximal zu einer Verdopplung der Viskosität der Epoxidharz-Zusammensetzung führt (bspw. keine oder weniger als zweifache Erhöhung der Viskosität bei Raumtemperatur (25°C) innerhalb von 24 h). Die Reifungszeit ist die Zeit beginnend mit der Bereitstellung der Faser-Martix-Halbzeug-Zusammensetzung bis zu dem Zeitpunkt, ab dem eine Probe von 2 g der entsprechenden Epoxidharz-Zusammensetzung bei schnellem Erwärmen von 0,5°C/sec auf 140°C eine Viskosität von 1 Pa*sec (gemessen bspw. in einem Rheometer (bspw. Viskosimeter Anton Paar MCR 301, FW3.30 (Platte-Platte-Konfiguration; Durchmesser 25 mm; *gap* 1000 µm, *oscillation, shear rate* 100 Hz))) nicht mehr unterschreitet.

Gegenstand der vorliegenden Erfindung ist auch gehärtetes Faser-Matrix-Halbzeug (gehärtetes SMC oder BMC), insbesondere gehärtetes SMC, herstellbar oder hergestellt durch Härtung des halbfesten Faser-Matrix-Halbzeugs bzw. des halbfesten SMC. Die Härtung wird zweckmäßigerweise durchgeführt bei Temperaturen in einem Bereich von 90 bis 200°C, vorzugsweise in einem Bereich von 110 bis 180°C, insbesondere in einem Bereich von 130 bis 170°C. Die Härtungszeit hängt ab von dem eingesetzten latenten Härter (B2) und der gewählten Härtungstemperatur. Sie sollte so gewählt sein, dass mindestens 95 %, vorzugsweise mindestens 98 % der nach dem Eindicken im halbfesten Faser-Matrix-Halbzeug noch verbliebenen Epoxidgruppen umgesetzt werden. Üblicherweise liegt die Härtungszeit in einem Bereich von 1 bis 120 min, vorzugsweise 2 bis 60 min, besonders bevorzugt 2 bis 15 min, insbesondere 2 bis 5 min. Die Härtung erfolgt üblicherweise durch Formpressen bei einem Druck von 5 bis 200 bar, insbesondere von 25 bis 150 bar.

Gegenstand der vorliegenden Erfindung ist auch die Verwendung einer Epoxidharz-Zusammensetzung umfassend eine Harzkomponente (A) umfassend mindestens ein Epoxidharz (A1) und eine Härterkomponente (B) umfassend mindestens eine Imidazolverbindung (B1) und mindestens einen latenten Härter (B2) als Matrix-Komponente für die Herstellung von halbfestem SMC oder für die Herstellung von gehärtetem SMC, wobei die Menge der eingesetzten Imidazolverbindungen (B1) in einem Bereich von 0,007 bis 0,025 mol pro mol Epoxidgruppen der gesamten Zusammensetzung liegt, und wobei die Gesamtmenge an gegebenenfalls enthaltenen primären Amin-Gruppen einen Anteil von 0,09 mol pro mol Epoxidgruppen der gesamten Zusammensetzung nicht überschreitet.

Gegenstand der vorliegenden Erfindung ist auch die Verwendung der erfindungsgemäßen SMC-Zusammensetzung für die Herstellung von halbfestem SMC oder für die Herstellung von gehärtetem SMC.

Die vorliegende Erfindung betrifft auch ein Screening-Verfahren zur Identifikation von Epoxidharz-basierten Zusammensetzungen, die geeignet sind als Matrix für Epoxidharz-basiertes SMC, umfassend die Schritte
(a) Bereitstellen der zu prüfenden Epoxidharz-basierten Zusammensetzung durch Vermischen ihrer Bestandteile,
(b) Messen der Glasübergangstemperatur im Zeitverlauf während der Lagerung der Epoxidharz-basierten Zusammensetzung bei einer bestimmten Lagertemperatur bis ein zuvor festgelegter oberer Grenzwert für die Glasübergangstemperatur überschritten wird, und Bestimmen der Zeit beginnenden von der Bereitstellung der zu prüfenden Epoxidharz-basierten Zusammensetzung bis zur Überschreitung des Grenzwerts, und
(c) Messen des Viskositätsminimums im Zeitverlauf während der Lagerung der Epoxidharz-basierten Zusammensetzung bei einer bestimmten Lagertemperatur bis ein zuvor festgelegter unterer Grenzwert für das Viskositätsminimum überschritten wird, und Bestimmen der Zeit beginnend von der Bereitstellung der zu prüfenden Epoxidharz-basierten Zusammensetzung bis zur Überschreitung des Grenzwerts,
wobei die zu prüfende Epoxidharz-basierte Zusammensetzung als Bestandteile zumindest ein Epoxidharz, ein Verdickungsmittel und einen latenten Härter umfasst,
wobei das Verdickungsmittel ein Reagenz ist, das bei der Lagertemperatur unter Kettenverlängerung mit den Epoxidgruppen des Epoxidharzes reagiert, aufgrund seiner Reaktivität oder der eingesetzten Menge binnen der Lagerzeit aber nicht zur vollständigen Aushärtung des Epoxidharzes führt,
wobei der latente Härter ein Reagenz ist, der bei Lagertemperatur nicht nennenswert mit dem Epoxidharz reagiert,
wobei das Viskositätsminimum den geringsten Viskositätswert bezeichnet, den die zu prüfende Epoxidharz-basierte Zusammensetzung bei schneller Erhöhung der Temperatur auf eine zuvor festgelegte Aushärtungstemperatur erreicht, bis es durch die von dem latenten Härter bewirkte Aushärtung der zu prüfenden Epoxidharz-basierten Zusammensetzung zu einem Wiederanstieg der Viskosität kommt,
wobei die Aushärtungstemperatur eine Temperatur ist, bei der der latente Härter zur vollständigen Aushärtung der zu prüfenden Epoxidharz-basierten Zusammensetzung führt,
wobei eine nicht nennenswerte Reaktion des latenten Härters mit dem Epoxidharz eine solche ist, die binnen von 24 h bei Lagertemperatur maximal zu einer Verdopplung der Viskosität der zu prüfenden Epoxidharz-basierten Zusammensetzung führt,
wobei eine vollständige Aushärtung ein solche ist, bei der mindestens 90 % aller Epoxidgruppen der zu prüfenden Epoxidharz-basierten Zusammensetzung umgesetzt sind,
wobei eine schnelle Erhöhung der Temperatur bei der Messung des Viskositätsminimums eine solche ist, bei der die Temperatur der zu prüfenden Epoxidharz-basierten Zusammensetzung mit mindestens 0,1°C/sec von der Lagertemperatur auf die Aushärtungstemperatur gebracht wird,
wobei die Lagertemperatur eine Temperatur in dem Bereich von 10 bis 50°C und die Lagerzeit ein Zeitraum von mindestens 30 Tagen ist, und
wobei der obere Grenzwert für die Glasübergangstemperatur so gewählt ist, dass er in einem Bereich von -5 bis +10 °C liegt, und der untere Grenzwert für das Viskositätsminimum so gewählt ist, dass er in einem Bereich von 0,5 bis 10 Pa*sec liegt.

Die in Schritt (b) bestimmte Zeit beginnenden von der Bereitstellung der zu prüfenden Epoxidharz-basierten Zusammensetzung bis zur Überschreitung des oberen Grenzwerts für die Glasübergangstemperatur ist ein Maß für die Zeitdauer, während der das SMC mit der zu prüfenden Epoxidharz-basierten Zusammensetzung als Matrix ausreichend flexibel für eine Konfektionierung (bspw. Abrollen des SMC von der Vorratsrolle und Zuschneiden geeigneter Stücke für das Formpressen) ist. Im Sinne dieser Anforderung ist ein SMC auf Basis der zu prüfenden Epoxidharz-basierten Zusammensetzung beispielsweise dann zweckmäßig, wenn die in Schritt (b) bestimmte Zeit bei einer Lagertemperatur von 25°C und einem oberen Grenzwert für die Glasübergangstemperatur von 5°C einen Wert von mindestens 3 Tage, vorzugsweise 5 Tage, insbesondere 7 Tage erreicht.

Die in Schritt (c) bestimmte Zeit beginnenden von der Bereitstellung der zu prüfenden Epoxidharz-basierten Zusammensetzung bis zur Überschreitung des unteren Grenzwerts für das Viskositätsminimum ist ein Maß für die Zeitdauer, die das SMC mit der zu prüfenden Epoxidharz-basierten Zusammensetzung als Matrix für die Reifung benötigt, sodass es für das Formpressen verwendet werden kann (ohne dass die Formmasse aus der Form herausspritzt). Im Sinne dieser Anforderung ist ein SMC auf Basis der zu prüfenden Epoxidharz-basierten Zusammensetzung beispielsweise dann zweckmäßig, wenn die in Schritt (c) bestimmte Zeit bei einer Lagertemperatur von 25°C, einem Temperaturanstieg auf eine Aushärtungstemperatur von 140°C mit 0,5°C/sec und einem unteren Grenzwert für das Viskositätsminimum von 1 Pa*sec einen Wert von maximal 14 Tagen, vorzugsweise 10 Tagen, besonders bevorzugt 8 Tagen, insbesondere 6 Tagen erreicht.

In einer besonderen Ausführungsform umfasst das Screening-Verfahren noch einen weiteren Schritt (d), nämlich die Auswahl einer solchen Epoxidharz-basierten Zusammensetzung für den Einsatz als Matrix-Komponente in einer SMC, für die die in Schritt (b) bestimmte Zeit einen bestimmten Mindestwert erreicht oder überschreitet, und für die die in Schritt (c) bestimmte Zeit einen bestimmten Maximalwert nicht überschreitet. Vorzugsweise ist der bestimmte Mindestwert für die in Schritt (b) bestimmte Zeit 3 Tage, vorzugsweise 5 Tage, insbesondere 7 Tage, vorzugsweise bei einer Lagertemperatur von 25°C. Vorzugsweise ist der bestimmte Maximalwert für die in Schritt (c) bestimmte Zeit 14 Tage, vorzugsweise 10 Tage, besonders bevorzugt 8 Tage, insbesondere 6 Tage, vorzugsweise bei einer Lagertemperatur von 25°C.

In dem erfindungsgemäßen Screening-Verfahren liegt die Aushärtungstemperatur vorzugsweise in dem Bereich von 90 bis 200°C, insbesondere von 130 bis 170°C, beispielsweise bei 140°C. Die Lagertemperatur liegt vorzugsweise in dem Bereich von 15 bis 40°C, beispielsweise bei 25°C. Die Lagerzeit liegt vorzugsweise bei mindestens 60, insbesondere bei mindestens 90 Tagen. Eine vollständige Aushärtung ist bevorzugt ein solche, bei der mindestens 95 %, insbesondere mindestens 98 % aller Epoxidgruppen der zu prüfenden Epoxidharz-basierten Zusammensetzung umgesetzt sind. Der obere Grenzwert für die Glasübergangstemperatur liegt vorzugsweise in dem Bereich von 0 bis 8°C, beispielsweise bei 5°C. Der untere Grenzwert für das Viskositätsminimum liegt vorzugsweise in dem Bereich von 0,8 bis 5 Pa*sec, beispielsweise bei 1 Pa*sec. Der schnelle Temperaturanstieg der zu prüfenden Epoxidharz-basierten Zusammensetzung von der Lagertemperatur zur Aushärtungstemperatur erfolgt vorzugsweise mit mindestens 0,2°C/sec, beispielsweise mit 0,5°C/sec. Geeignete Verdickungsmittel für das erfindungsgemäße Screening-Verfahren sind beispielsweise Imidazol und Derivate des Imidazols, mono-, di- und polyfunktionale primäre Amine, mindestens difunktionale sekundäre Amine, Carbonsäuren, Carbonsäureanhydride, tertiäre Amine, Mannich-Basen, Guanidine und substituierte Guanidine, substituierte Harnstoffverbindungen, Guanamin-Derivate, Melaminharze und Ketimine . Ein geeigneter latenter Härter für das erfindungsgemäße Screening-Verfahren ist bspw. DICY.

Epoxidharz-basiertes Faser-Matrix-Halbzeug kommt im Vergleich zu den bekannten Polyester-basierten Faser-Matrix-Halbzeugen ohne die gesundheitlich problematischen Vinylmonomere, insbesondere ohne Styrol aus. Zudem zeichnen sich Epoxid-basierte Harze durch besonders günstige mechanische Eigenschaften, Temperatur- und Chemikalienbeständigkeit verglichen mit Polyester-basierten Harzen aus.

### Beispiele

### Beispiel 1

### Herstellung von Epoxidharz-Zusammensetzungen E1 bis E11 (erfindungsgemäß) und C1 bis C6 (zum Vergleich)

Jeweils 10 kg DEGBA (A 18-00, Leuna Harze GmbH, EEW = 180 g/eq) wurden mit unterschiedlichen Härterkomponenten in einer Mischvorrichtung bei Raumtemperatur miteinander vermischt. Die Bestandteile sowie deren Mengen sind für die Härterkomponenten der Zusammensetzungen E1 bis E11 und C1 bis C6 in der Tabelle 1 zusammengefasst.

**Tabelle 1:**

| Zusammensetzung der Härterkomponente für die Epoxidharz-Zusammensetzungen C1 bis C6 und E1 bis E11 | | | | | | |
|---|---|---|---|---|---|---|
| | API | 1-Et-I | 2Et-4-Me-I | PA | IPDA | DICY |
| C1 | 0,05 | | | | | 0,14 |
| C2 | 0,005 | | | | | 0,14 |
| C3 | | 0,016 | | 0,1 | | 0,14 |
| C4 | | 0,005 | | 0,016 | | 0,14 |
| C5 | | 0,05 | | 0,016 | | 0,14 |
| C6 | | 0,027 | | | 0,094 | 0,35 |
| E1 | 0,014 | | | | | 0,14 |
| E2 | 0,014 | | | | | 0,2 |
| E3 | 0,02 | | | | | 0,14 |
| E4 | 0,01 | | | | | 0,14 |
| E5 | | 0,02 | | | | 0,14 |
| E6 | | | 0,02 | | | 0,14 |
| E7 | | | 0,023 | 0,03 | | 0,14 |
| E8 | | 0,016 | | 0,016 | | 0,14 |
| E9 | | | 0,016 | 0,009 | | 0,14 |
| E10 | | | 0,009 | | 0,014 | 0,14 |
| E11 | | | 0,018 | | 0,023 | 0,14 |

| | | | | | | |
|---|---|---|---|---|---|---|
| API: N-(3-Aminopropyl)imidazole; 1-Et-I: 1-Ethylimidazol; 2-Et-4-Me-I: 2-Ethyl-4-methylimidazol; PA: 1-Propylamin; IPDA: Isophorondiamin; DICY: Dicyandiamid; alle Mengenangaben als mol pro mol Epoxidgruppe in der gesamten Epoxidharz-Zusammensetzung | | | | | | |

### Beispiel 2:

### Messung der Glasübergangstemperatur und der Viskosität für die Epoxidharz-Zusammensetzungen E1 bis E11 und C1 bis C6 im Zeitverlauf

Für die Epoxidharz-Zusammensetzungen E1 bis E11 und C1 bis C6 wurde die Glasübergangstemperatur mittels Differential Kalorimetrie (DSC) gemäß der Norm DIN 53765 unmittelbar nach der Vermischung der Bestandteile der jeweiligen Epoxidharz-Zusammensetzungen gemessen und danach je einmal täglich während der Lagerung der entsprechenden Epoxidharz-Zusammensetzungen bei 25 °C. Die so bestimmten Glasübergangstemperaturen in Abhängigkeit von der Lagerzeit ist in Tabelle 2 für die jeweiligen Epoxidharz-Zusammensetzungen E1 bis E11 und C1 bis C6 zusammengestellt

Für die Epoxidharz-Zusammensetzungen E1 bis E11 und C1 bis C6 wurde unmittelbar nach der Vermischung der Bestandteile der jeweiligen Epoxidharz-Zusammensetzungen und danach je einmal täglich während der Lagerung bei 25 °C das Viskositätsminimum bestimmt, das bei einer schnellen Erwärmung der Probe durchlaufen wird. Dazu wurde jeweils eine Probe (etwa 2 g) der jeweiligen Epoxidharz-Zusammensetzung genommen und mit 0,5 °C/sec von der Lagertemperatur (25 °C) auf die Aushärtungstemperatur (140 °C) erwärmt und gleichzeitig der Viskositätsverlauf gemessen. Die Viskositätsmessung erfolgte mittels eines Rheometers (Viskosimeter Anton Paar MCR 301, FW3.30 (Platte-Platte-Konfiguration; Durchmesser 25 mm; *gap* 1000 µm, *oscillation, shear rate* 100 Hz)). Durch die Erwärmung der Probe reduziert sich die Viskosität zunächst, im weiteren Zeitverlauf steigt sie dann jedoch aufgrund der einsetzenden latenten Härtung schnell wieder an. Das dabei durchlaufene Viskositätsminimum in Abhängigkeit von der Lagerzeit ist in Tabelle 3 für die jeweiligen Epoxidharz-Zusammensetzungen E1 bis E11 und C1 bis C6 zusammengestellt.

**Tabelle 2:**

| Glasübergangstemperatur (in °C) im Zeitverlauf (0 bis maximal 14 Tage) für die Epoxidharz-Zusammensetzungen E1 bis E11 und C1 bis C6 | | | | | | | | | | | | | | | |
|---|---|---|---|---|---|---|---|---|---|---|---|---|---|---|---|
| | Lagerzeit in Tagen bei 25 °C | | | | | | | | | | | | | | |
| | 0 | 1 | 2 | 3 | 4 | 5 | 6 | 7 | 8 | 9 | 10 | 11 | 12 | 13 | 14 |
| C1 | -19 | -6 | 12 | 20 | | | | | | | | | | | |
| C2 | -16 | -15 | -13 | -13 | -14 | -13 | -12 | -11 | -10 | -9 | -8 | -8 | -8 | -5 | -5 |
| C3 | -18 | -5 | 1 | 12 | 16 | | | | | | | | | | |
| C4 | -16 | -14 | -14 | -14 | -13 | -11 | -10 | -9 | -8 | -8 | -7 | -8 | -2 | -3 | 0 |
| C5 | -20 | -13 | -1 | 19 | 23 | | | | | | | | | | |
| C6 | -23 | 15 | >50 | | | | | | | | | | | | |
| E1 | -16 | -14 | -11 | -9 | -7 | -2 | 3 | 7 | | | | | | | |
| E2 | -16 | -14 | -12 | -11 | -12 | -3 | 2 | 5 | 11 | | | | | | |
| E3 | -17 | -12 | -8 | -5 | 2 | 9 | 15 | | | | | | | | |
| E4 | -17 | -14 | -12 | -12 | -10 | -8 | -5 | 0 | | 4 | | | | | |
| E5 | -17 | -15 | -10 | -8 | -4 | 2 | 8 | 12 | | | | | | | |
| E6 | -16 | -15 | -13 | -12 | -10 | -8 | -1 | 4 | | 14 | | | | | |
| E7 | -17 | -12 | -10 | -8 | -2 | 6 | 13 | | | | | | | | |
| E8 | -17 | -13 | -9 | -7 | -3 | 4 | 10 | 13 | 17 | | | | | | |
| E9 | -16 | -14 | -13 | -12 | -10 | -6 | -1 | 3 | | 12 | | | | | |
| E10 | -15 | -12 | -12 | -11 | -11 | -9 | -7 | -5 | -3 | -2 | 0 | 4 | 7 | 11 | |
| E11 | -17 | -11 | -7 | -6 | -3 | 3 | 9 | 14 | | | | | | | |

**Tabelle 3:**

| Viskositätsminimum (in Pa*sec) im Zeitverlauf 0 bis maximal 14 Tage) für die Epoxidharz-Zusammensetzungen E1 bis E11 und C1 bis C6 | | | | | | | | | | | | | | | |
|---|---|---|---|---|---|---|---|---|---|---|---|---|---|---|---|
| | Lagerzeit in Tagen bei 25 °C | | | | | | | | | | | | | | |
| | 0 | 1 | 2 | 3 | 4 | 5 | 6 | 7 | 8 | 9 | 10 | 11 | 12 | 13 | 14 |
| C1 | 0,05 | 0,6 | >10 | | | | | | | | | | | | |
| C2 | 0,02 | 0,03 | 0,03 | 0,03 | 0,04 | 0,04 | 0,06 | 0,07 | 0,1 | 0,1 | 0,1 | 0,1 | 0,2 | 0,2 | 0,3 |
| C3 | 0,04 | 0,2 | 0,5 | 2 | >10 | | | | | | | | | | |
| C4 | 0,02 | 0,02 | 0,03 | 0,03 | 0,04 | 0,04 | 0,06 | 0,06 | 0,08 | 0,1 | 0,1 | 0,1 | 0,2 | 0,3 | 0,4 |
| C5 | 0,03 | 0,1 | 4 | >10 | | | | | | | | | | | |
| C6 | 0,09 | >10 | | | | | | | | | | | | | |
| E1 | 0,03 | 0,05 | 0,1 | 0,2 | 0,4 | 1 | 4 | >10 | | | | | | | |
| E2 | 0,04 | 0,06 | 0,1 | 0,2 | 0,5 | 1 | 2,5 | >10 | | | | | | | |
| E3 | 0,03 | 0,2 | 0,2 | 0,6 | 3 | >10 | | | | | | | | | |
| E4 | 0,03 | 0,05 | 0,06 | 0,07 | 0,2 | 0,2 | 0,4 | 0,6 | 1,5 | 5 | >10 | | | | |
| E5 | 0,03 | 0,05 | 0,1 | 0,2 | 0,3 | 1 | 5 | >10 | | | | | | | |
| E6 | 0,02 | 0,03 | 0,04 | 0,07 | 0,1 | 0,3 | 0,7 | 2,5 | 8 | >10 | | | | | |
| E7 | 0,03 | 0,05 | 0,1 | 0,2 | 1 | 3 | >10 | | | | | | | | |
| E8 | 0,03 | 0,06 | 0,1 | 0,2 | 0,4 | 1 | 4,5 | >10 | | | | | | | |
| E9 | 0,03 | 0,03 | 0,05 | 0,08 | 0,1 | 0,3 | 0,6 | 1,5 | >10 | | | | | | |
| E10 | 0,03 | 0,03 | 0,05 | 0,05 | 0,07 | 0,09 | 0,1 | 0,2 | 0,4 | 0,7 | 1,5 | 5 | >10 | | |
| E11 | 0,04 | 0,05 | 0,1 | 0,3 | 0,5 | 1,5 | 8 | >10 | | | | | | | |

### Beispiel 3:

### SMC Produktion (basierend auf der Zusammensetzung E1)

10 kg DEGBA (A 18-00, Leuna Harze GmbH, EEW = 180 g/eq), 650 g of DICY (DYHARD® 100S, Alzchem) und 100 g N-(3-Aminopropyl)imidazol (Lupragen® API, BASF) wurden in einer Mischvorrichtung miteinander vermischt. Die so hergestellte Paste (Epoxidharz-Zusammensetzung E1) wurde bei Raumtemperatur in die Vorratsgefäße des Rakelsystems einer konventionellen SMC-Maschine überführt. In der SMC-Maschine wurden zwischen zwei Folien Glasfaserstücke (P204, Owens Corning, mit einer mittleren Länge von 2,5 cm); 60 Gew.-% bezogen auf die gesamte SMC-Zusammensetzung) zu der Paste hinzugefügt und so imprägniert. Das so erhaltene SMC wurde auf eine Rolle aufgerollt und zur Eindickung bei Raumtemperatur gelagert. Nach 5 Tagen hatte das SMC eine lederartige Konsistenz. Es wurde abgerollt für die Formpressung zurechtgeschnitten. Anschließend wurde das SMC während 5 min bei einer Temperatur von 150°C und einem Druck von 100 bar in einer Formpresse gehärtet. Für das gehärtete Material wurden die mechanischen Eigenschaften bestimmt. Standardnomen der Messmethoden und die Ergebnisse der Messungen sind in Tabelle 4 zusammengefasst.

**Tabelle 4:**

| Mechanische Eigenschaften eines gehärten SMC (Epoxidharz-Zusammensetzung E1 als Matrix) | | |
|---|---|---|
| Biege-Eigenschaften (gemäß DIN EN ISO 14125) | Biegemodul [Mpa] | 15.000 |
| | Biegefestigkeit [Mpa] | 400 |
| | maximale Biegeverlängerung [%] | 3,5 |
| Zug-Eigenschaften (gemäß DIN EN ISO 527-4) | Elastizitätsmodul [Mpa] | 14.500 |
| | Zugfestigkeit [Mpa] | 230 |
| | maximale Zugdehnung [%] | 2,2 |
| Charpy-Test (gemäß ISO 179-2/1 eU: 1997) | [kJ/m²] | 130 |

## Patentansprüche

1. Eine Faser-Matrix-Halbzeug-Zusammensetzung umfassend
eine Epoxidharz-Zusammensetzung enthaltend
eine Harzkomponete (A), die mindestens ein Epoxidharz (A1) umfasst, und
eine Härterkomponente (B), die mindestens eine Imidazolverbindung (B1) und mindestens einen latenten Härter (B2) umfasst, und umfassend
kurze Verstärkungsfasern (C) mit einer mittleren Länge von 0,3 bis 5,0 cm, die in der Epoxidharz-Zusammensetzung suspendiert sind,
wobei die Menge der eingesetzten Imidazolverbindungen (B1) in einem Bereich von 0,007 bis 0,025 mol pro mol Epoxidgruppen der gesamten Zusammensetzung liegt, und
wobei die Gesamtmenge an gegebenenfalls enthaltenen primären Amin-Gruppen einen Anteil von 0,09 mol pro mol Epoxidgruppen der gesamten Zusammensetzung nicht überschreitet.

2. Die Faser-Matrix-Halbzeug-Zusammensetzung gemäß Anspruch 1, wobei die kurzen Verstärkungsfasern (C) eine mittlere Länge von 1,2 bis 5,0 cm aufweisen.

3. Die Faser-Matrix-Halbzeug-Zusammensetzung gemäß Anspruch 1 oder 2, wobei die kurzen Verstärkungsfasern (C) mindestens 10 Gew.-% bezogen auf die gesamte Faser-Matrix-Halbzeug-Zusammensetzung ausmachen.

4. Die Faser-Matrix-Halbzeug-Zusammensetzung gemäß einem der Ansprüche 1 bis 3, wobei die kurzen Verstärkungsfasern (C) Glasfasern und/oder Carbon-Fasern sind.

5. Die Faser-Matrix-Halbzeug-Zusammensetzung gemäß einem der Ansprüche 1 bis 4, wobei das Epoxidharz (A1) ein Diglycidylether von monomerem oder oligomerem Diol ist, wobei das Diol ausgewählt ist aus der Gruppe bestehend aus Bisphenol A oder Bisphenol F, oder hydriertem Bisphenol A oder Bisphenol F.

6. Die Faser-Matrix-Halbzeug-Zusammensetzung gemäß einem der Ansprüche 1 bis 5, wobei die Faser-Matrix-Halbzeug-Zusammensetzung als weiteren Bestandteil der Harzkomponente (A) neben dem Epoxidharz (A1) einen Reaktivverdünner (A2) umfasst.

7. Die Faser-Matrix-Halbzeug-Zusammensetzung gemäß einem der Ansprüche 1 bis 6, wobei die Imidazolverbindung (B1) eine Imidazolverbindung der allgemeinen Formel I 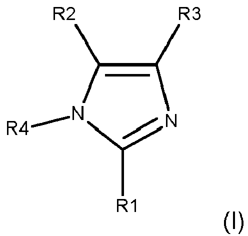 ist,
wobei
R1 ein Wasserstoffatom, eine Alkylgruppe, eine Arylgruppe oder eine Arylalkylgruppe ist, R2 und R3 jeweils unabhängig voneinander ein Wasserstoffatom oder eine Alkylgruppe sind, und
R4 ein Wasserstoffatom, eine Alkylgruppe, eine Benzylgruppe oder eine Aminoalkylgruppe ist.

8. Die Faser-Matrix-Halbzeug-Zusammensetzung gemäß Anspruch 7, wobei
R1 ein Wasserstoffatom, eine Alkylgruppe mit 1 bis 4 C-Atomen, eine Arylgruppe mit 3 bis 7 C-Atomen oder eine Arylalkylgruppe mit 4 bis 10 C-Atomen ist,
R2 und R3 jeweils unabhängig voneinander ein Wasserstoffatom oder eine Alkylgruppe mit 1 bis 4 C-Atomen sind, und
R4 ein Wasserstoffatom, eine Alkylgruppe mit 1 bis 4 C-Atomen, eine Benzylgruppe oder eine Aminoalkylgruppe mit 2 bis 4 C-Atomen ist.

9. Die Faser-Matrix-Halbzeug-Zusammensetzung gemäß Anspruch 7 oder 8, wobei R4 ein Wasserstoffatom, eine Alkylgruppe mit 1 bis 4 C-Atomen oder eine Benzylguppe ist.

10. Die Faser-Matrix-Halbzeug-Zusammensetzung gemäß Anspruch 7 oder 8, wobei R4 eine Aminoalkylgruppe mit 2 bis 4 C-Atomen und einer primären Aminogruppe ist.

11. Die Faser-Matrix-Halbzeug-Zusammensetzung gemäß einem der Ansprüche 1 bis 6, wobei der latenter Härter (B2) Dicyandiamid ist.

12. Ein Verfahren zur Herstellung einer Faser-Matrix-Halbzeug-Zusammensetzung, umfassend das Vermischen der Bestandteile der Faser-Matrix-Halbzeug-Zusammensetzung nach einem der Ansprüche 1 bis 11 bei einer Temperatur, bei der das eingesetzte Epoxidharz (A1) noch nicht nennenswert mit dem eingesetzten latenten Härter (B2) reagiert.

13. Ein Verfahren zur Herstellung von reifem halbfestem Faser-Matrix-Halbzeugs umfassend das Bereitstellen einer Faser-Matrix-Halbzeug-Zusammensetzung nach einem der Ansprüche 1 bis 11 und das Reifen der Zusammensetzung bei einer Temperatur, bei der das eingesetzte Epoxidharz (A1) noch nicht nennenswert mit dem eingesetzten latenten Härter (B2) reagiert für mindestens die Dauer der Reifungszeit, wobei die Reifungszeit die Zeit ist beginnend mit der Bereitstellung der Faser-Matrix-Halbzeug-Zusammensetzung bist zu dem Zeitpunkt, ab dem eine Probe von 2 g der entsprechenden Epoxidharz-Zusammensetzung bei schnellem Erwärmen mit 0,5°C/sec auf 140°C eine Viskosität von 1 Pa*sec nicht mehr unterschreitet.

14. Ein reifes halbfestes Faser-Matrix-Halbzeug, herstellbar durch das Verfahren nach Anspruch 13.

15. Ein gehärtetes Faser-Matrix-Halbzeug, herstellbar durch Härtung des halbfesten Faser-Matrix-Halbzeugs nach Anspruch 14.

16. Verwendung der Faser-Matrix-Halbzeug-Zusammensetzung nach einem der Ansprüche 1 bis 7 für die Herstellung von halbfesten *Sheet Molding Compounds* oder für die Herstellung von gehärteten *Sheet Molding Compounds.*

17. Verwendung einer Epoxidharz-Zusammensetzung umfassend
eine Harzkomponente (A) umfassend mindestens ein Epoxidharz (A1) und
eine Härterkomponente (B) umfassend mindestens eine Imidazolverbindung (B1) und mindestens einen latenten Härter (B2)
als Matrix-Komponente für die Herstellung von halbfesten *Sheet Molding Compounds* oder für die Herstellung von gehärteten *Sheet Molding Compounds,*
wobei die Menge der eingesetzten Imidazolverbindungen (B1) in einem Bereich von 0,007 bis 0,025 mol pro mol Epoxidgruppen der gesamten Zusammensetzung liegt, und
wobei die Gesamtmenge an gegebenenfalls enthaltenen primären Amin-Gruppen einen Anteil von 0,09 mol pro mol Epoxidgruppen der gesamten Zusammensetzung nicht überschreitet.

18. Screening-Verfahren zur Identifikation von Epoxidharz-basierten Zusammensetzungen, die geeignet sind als Matrix für Epoxidharz-basierten *Sheet Molding Compounds,* umfassend die Schritte
(a) Bereitstellen der zu prüfenden Epoxidharz-basierten Zusammensetzung durch Vermischen ihrer Bestandteile,
(b) Messen der Glasübergangstemperatur im Zeitverlauf während der Lagerung der Epoxidharz-basierten Zusammensetzung bei einer bestimmten Lagertemperatur bis ein zuvor festgelegter oberer Grenzwert für die Glasübergangstemperatur überschritten wird, und Bestimmen der Zeit beginnenden von der Bereitstellung der zu prüfenden Epoxidharz-basierten Zusammensetzung bis zur Überschreitung des Grenzwerts, und
(c) Messen des Viskositätsminimums im Zeitverlauf während der Lagerung der Epoxidharz-basierten Zusammensetzung bei einer bestimmten Lagertemperatur bis ein zuvor festgelegter unterer Grenzwert für das Viskositätsminimum überschritten wird, und Bestimmen der Zeit beginnend von der Bereitstellung der zu prüfenden Epoxidharz-basierten Zusammensetzung bis zur Überschreitung des Grenzwerts,
wobei die zu prüfende Epoxidharz-basierte Zusammensetzung als Bestandteile zumindest ein Epoxidharz, ein Verdickungsmittel und einen latenten Härter umfasst,
wobei das Verdickungsmittel ein Reagenz ist, das bei der Lagertemperatur unter Kettenverlängerung mit den Epoxidgruppen des Epoxidharzes reagiert, aufgrund seiner Reaktivität oder der eingesetzten Menge binnen der Lagerzeit aber nicht zur vollständigen Aushärtung des Epoxidharzes führt,
wobei der latente Härter ein Reagenz ist, der bei Lagertemperatur nicht nennenswert mit dem Epoxidharz reagiert,
wobei das Viskositätsminimum den geringsten Viskositätswert bezeichnet, den die zu prüfende Epoxidharz-basierte Zusammensetzung bei schneller Erhöhung der Temperatur auf eine zuvor festgelegte Aushärtungstemperatur erreicht, bis es durch die von dem latenten Härter bewirkte Aushärtung der zu prüfenden Epoxidharz-basierten Zusammensetzung zu einem Wiederanstieg der Viskosität kommt,
wobei die Aushärtungstemperatur eine Temperatur ist, bei der der latente Härter zur vollständigen Aushärtung der zu prüfenden Epoxidharz-basierten Zusammensetzung führt,
wobei eine nicht nennenswerte Reaktion des latenten Härters mit dem Epoxidharz eine solche ist, die binnen von 24 h bei Lagertemperatur maximal zu einer Verdopplung der Viskosität der zu prüfenden Epoxidharz-basierten Zusammensetzung führt,
wobei eine vollständige Aushärtung ein solche ist, bei der mindestens 90 % aller Epoxidgruppen der zu prüfenden Epoxidharz-basierten Zusammensetzung umgesetzt sind,
wobei eine schnelle Erhöhung der Temperatur bei der Messung des Viskositätsminimums eine solche ist, bei der die Temperatur der zu prüfenden Epoxidharz-basierten Zusammensetzung mit mindestens 0,1°C/sec von der Lagertemperatur auf die Aushärtungstemperatur gebracht wird,
wobei die Lagertemperatur eine Temperatur in dem Bereich von 10 bis 50°C und die Lagerzeit ein Zeitraum von mindestens 30 Tagen ist, und
wobei der obere Grenzwert für die Glasübergangstemperatur so gewählt ist, dass er in einem Bereich von -5 bis +10°C liegt, und der untere Grenzwert für das Viskositätsminimum so gewählt ist, dass er in einem Bereich von 0,5 bis 10 Pa*sec liegt.
